(19) **Europäisches Patentamt / European Patent Office / Office européen des brevets**

(11) **EP 4 466 785 B1**

(12) **FASCICULE DE BREVET EUROPEEN**

(45) Date de publication et mention de la délivrance du brevet:
**04.02.2026 Bulletin 2026/06**

(21) Numéro de dépôt: **22854159.5**

(22) Date de dépôt: **23.12.2022**

(51) Classification Internationale des Brevets (IPC):
**H02P 21/14** *(2016.01)*    **H02P 21/18** *(2016.01)*

(52) Classification Coopérative des Brevets (CPC):
**H02P 21/141; H02P 21/18**

(86) Numéro de dépôt international:
**PCT/FR2022/052501**

(87) Numéro de publication internationale:
**WO 2023/135374 (20.07.2023 Gazette 2023/29)**

(54) **DISPOSITIF ET PROCÉDÉ DE COMMANDE D'UNE MACHINE SYNCHRONE ET D'ESTIMATION DE LA POSITION ROTOR, DU DÉMARRAGE À UNE FAIBLE VITESSE PRÉDÉTERMINÉE**

VORRICHTUNG UND VERFAHREN ZUR STEUERUNG EINER SYNCHRONMASCHINE UND ZUR ROTORPOSITIONSSCHÄTZUNG VON INBETRIEBNAHME AUF EINE VORBESTIMMTE NIEDRIGE GESCHWINDIGKEIT

DEVICE AND METHOD FOR CONTROLLING A SYNCHRONOUS MACHINE AND FOR ESTIMATING ROTOR POSITION, FROM START-UP TO A PREDETERMINED LOW SPEED

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.01.2022 FR 2200377**

(43) Date de publication de la demande:
**27.11.2024 Bulletin 2024/48**

(73) Titulaire: **Safran Electrical & Power 31702 Blagnac (FR)**

(72) Inventeur: **ROUHANA, Najib Moissy-Cramayel (FR)**

(74) Mandataire: **Cabinet Camus Lebkiri 25 rue de Maubeuge 75009 Paris (FR)**

(56) Documents cités:
**CN-A- 108 847 795    CN-A- 113 938 077 CN-B- 110 429 886**

**Description**

**DOMAINE TECHNIQUE DE L'INVENTION**

Le domaine technique de l'invention est celui de la commande des machines électriques tournantes synchrones dépourvues d'un capteur de position angulaire par une estimation d'une position angulaire d'un rotor par rapport à un stator.

La présente invention concerne le procédé de commande du moteur synchrone dépourvue de capteur de position angulaire du démarrage à la faible vitesse.

**ARRIERE-PLAN TECHNOLOGIQUE DE L'INVENTION**

Une machine électrique est équipée d'un stator inducteur comprenant des enroulements et d'un rotor comprenant un corps induit et un arbre de rotation.

Un exemple de l'art antérieur pertinent est décrit dans le document CN 110 429 886 B.

Pour contrôler une machine électrique synchrone, il est nécessaire de connaitre la position et la vitesse du rotor. Il est ainsi connu d'utiliser un capteur de mesure angulaire du rotor (codeur ou resolver) permettant de détecter la position exacte du rotor ainsi que sa vitesse de rotation et envoyer ce signal de position rotorique à une unité de commande. Dans une machine électrique autopilotée, ce signal est utilisé pour asservir les courants dans les enroulements du stator inducteur. Cela permet au convertisseur d'ajuster la fréquence d'alimentation en fonction de la position du rotor, pour maintenir un angle $\theta$ de 90° entre le champ tournant statorique Hs et un champ rotorique Hr, pour que le couple moteur puisse toujours être maximal.

Cependant, dans certaines applications de densité massique élevée, notamment dans l'aéronautique, il est de plus en plus difficile d'intégrer des capteurs de position sur l'arbre rotorique de la machine électrique, en particulier lorsque l'environnement est encombrant ou difficile pour la maintenance. Par exemple, de tels capteurs de position doivent résister à de forte contrainte thermique, en particulier, il existe des besoins d'utiliser des moteurs synchrones sur des avions pouvant passer d'une température de 45°C, par exemple sur un tarmac à une température négative de -70°C lorsque l'avion est à haute altitude. En outre, ces capteurs de position sont couteux et peuvent subir d'autres contraintes, tels que des poussières, l'humidité etc... Toutes ces contraintes entrainent une réduction du MTBF (de l'anglais Mean Time Between Failure) correspondant au temps moyen entre les pannes d'un système réparable.

En outre, lorsque le couple est très élevé, il peut arriver que l'arbre rotor glisse par rapport au corps de rotor du capteur de position. Une erreur de position absolue prend naissance entre l'axe de référence du capteur de position et l'axe magnétique de la machine électrique. Le réglage initial angulaire du capteur angulaire est en conséquent modifié. En outre la partie mobile du capteur angulaire peut lui aussi glisser sur l'arbre rotor entraînant un décalage de la position angulaire. Ce décalage entraîne une dégradation qui peut emmener à un disfonctionnement de la commande de la machine électrique. En effet, dans une machine synchrone, par exemple triphasée, à aimants permanents, le couple produit dépend de l'interaction entre le flux rotorique et le flux statorique dans un plan dit plan rotorique propre à la machine électrique. Le flux rotorique étant produit par les aimants permanents, on règle le couple par le réglage du flux statorique pour lequel deux paramètres sont accessibles : l'amplitude du flux, réglée elle-même par l'amplitude des courants du système triphasé d'alimentation, et la phase du flux statorique par rapport au flux rotorique. Cette phase est elle-même réglée par la phase des courants statoriques. Pour une machine synchrone à pôles lisses, à amplitude courant donnée, le couple maximum est obtenu lorsque le flux rotorique est, à peu de chose près, en quadrature de phase par rapport au flux statorique.

Il existe ainsi des procédés de commande sans capteur de position permettant ainsi d'augmenter la fiabilité et réduire le cout du dispositif de commande.

Il existe notamment une solution d'estimation de la position angulaire du moteur à travers une approche d'estimation de la Fore Contre Electro-Motrice entre phases statoriques . Cependant l'amplitude de la force contre électromotrice est proportionnelle à la vitesse de rotation de la machine électrique. Ainsi, la détectabilité de la position électrique s'estompe naturellement avec la réduction de l'amplitude des forces contre électromotrices en fonction de la vitesse de rotation de la machine électrique. Cette solution est donc non applicable dans de faible vitesse de rotation ainsi qu'à l'arrêt.

Il est connu un dispositif de commande utilisant pour le démarrage, une séquence de démarrage en boucle ouverte de type I/f (courant/ fréquence) ou V/f (tension/fréquence) sans utilisation de l' information de la position rotorique mesurée. En effet, la fréquence électrique du champ statorique est imposée par l'utilisateur et est progressivement augmentée jusqu'à ce qu'elle soit suffisamment élevée pour être capable d'estimer les forces électromotrices. La pente de variation de la fréquence électrique doit être lente afin d'assurer l'accrochage du flux rotorique réel de la machine électrique avec le flux rotorique virtuel créé par cette approche boucle ouverte. Ce n'est qu'à partir de là, que la boucle de régulation via l'algorithme de commande sans capteur peut être utilisée en boucle fermée. Cette méthode nécessite une parfaite connaissance de l'inertie et de la charge entrainée par la machine électrique ainsi qu'une gestion spécifique, d'une part, de l'accélération de la vitesse à introduire en fonction du couple et, d'autre part, de la transition entre la boucle ouverte à la boucle fermée sous peine de décrochage de la machine électrique.

De plus, un phénomène qui rajoute des limitations au fonctionnement sans capteur dans la zone à faible vitesse de rotation provient des semi-conducteurs du convertisseur de puissance qui fonctionnement de façon non linéaire, dû aux temps morts appliqués aux fronts montants des commandes PWM, aux durées de la mise à l'état ON et OFF des commandes PWM ainsi qu'à la chute de tension aux bornes des semi-conducteurs. L'ensemble de ces phénomènes est la source de création d'une erreur dite erreur en tension, présente à l'échelle microscopique, et dont l'impact est moyenné à l'échelle macroscopique (au niveau d'un cycle électrique fondamentale) et est dominant dans la zone à basse vitesse de rotation. En effet le ratio erreur-amplitude fondamental est élevé à faible vitesse de rotation, ce qui n'est cependant pas le cas à haute vitesse de rotation. La valeur de la fréquence de la tension ou du courant de rang 1 (h1) est appelé « fondamental ».

Cette erreur en tension, induit une déformation du fondamental de la tension de commande appliquée en entrée de la machine électrique (en introduisant des harmoniques basses-fréquences). Cela se reflète à l'identique au niveau des courants statoriques, moyennant l'impédance de la machine électrique qui, à faible vitesse de rotation, est de faible valeur et est dans l'incapacité de filtrer ces harmoniques basses-fréquences. Ainsi, et comme mentionné précédemment, le ratio signal utile et bruits se dégrade ce qui impact négativement le procédé d'estimation de la position rotorique à faible vitesse de rotation (car ce dernier est conçu sous l'hypothèse du premier fondamental).

Ainsi une des problématiques est de démarrer en boucle fermée et sans capteur de position un moteur électrique de type synchrone, du démarrage avec un couple jusqu'à une vitesse de rotation spécifique.

## RESUME DE L'INVENTION

L'invention offre une solution aux problèmes évoqués précédemment, en permettant d'assurer un démarrage sans capteur et en boucle fermée, ainsi permet la prévention des phénomènes d'instabilité à faible vitesse de rotation et sous un couple de charge maximale, et de fonctionner en large zone de défluxage de la machine électrique. L"invention permet de proposer une nouvelle solution à base d'algorithme de commande sans capteur de position, qui permet d'assurer un démarrage fiable et robuste en boucle fermée, depuis l'arrêt de la machine électrique jusqu'à la vitesse de rotation maximale.

Un aspect de l'invention concerne un dispositif de commande d'un convertisseur onduleur pour le démarrage d'un moteur électrique synchrone multi-phasée jusqu'à une vitesse seuil prédéterminée, d'une machine électrique, le dispositif de commande comprenant :

- une boucle de régulation, comprenant :

    - un régulateur de courant pour délivrer une consigne de tension comprenant une tension quadratique et direct avec un angle, à partir d'une consigne de courant pour régulation,

    - une unité de calcul pour calculer une transformation de Park direct et indirect, l'unité de calcul comprenant une sortie de retour de courant dans un repère de Park, à partir de valeurs de mesures des courants des phases reçues, transformées dans un repère de Park, en courant quadratique de retour et en courant direct de retour, en prenant en compte une valeur de position angulaire estimée du rotor reçue,
    caractérisé en ce que le dispositif de commande comporte en outre :

- un estimateur d'angle adaptatif en boucle fermé, pour estimer la valeur de position angulaire estimée du rotor, en se basant sur une différence entre au moins une donnée d'un vecteur de flux statorique de référence calculé en fonction des courants de retour, et une donnée d'un vecteur de flux statorique adaptatif, calculé à partir de la consigne de tension, des courants de retour, et d'une vitesse électrique estimée calculée en fonction de cette différence,
- un modificateur de courant de consigne, dans lequel, lorsqu'une valeur absolue de la vitesse électrique estimée reçue par l'estimateur d'angle adaptatif est inférieure à la vitesse prédéterminée seuil, le modificateur calcule un courant direct de consigne pour régulateur ayant une valeur non nulle, modifiant ainsi un courant direct de consigne d'un courant de consigne reçu.

Grâce à l'invention, le dispositif de commande permet d'avoir une estimation de position angulaire pour un démarrage jusqu'à au moins une vitesse de rotation du rotor prédéterminée puis en option au-delà de cette vitesse de rotation prédéterminée passer à un autre calcul de la position angulaire, par exemple le calcul de la position angulaire du rotor par le biais de la force électromotrice FEM.

En effet, comme le couple est normalement égal à un gain multiplié par le courant quadratique :

[Math 1]

$$T_{em} = K_t i_q$$

sans erreur de position angulaire, en injectant un courant direct au démarrage, s'il n'y a pas d'erreur de position, le couple au rotor est égal au couple estimé mais s'il y a une erreur de position, le couple au rotor est différent du couple estime, puisque le couple est dépendant du sinus de l'erreur de position angulaire estimé :

[Math 2]

$$T_{em} \approx \hat{T}_{em} + K_t \hat{i}_d \sin(\Delta\theta) \ .$$

Donc, tant que le Sinus de la différence de position angulaire $\Delta\theta$ n'est pas égal à 0, le couple réel $T_{em}$ n'est pas égal au couple estimé $\hat{T}_{em}$ car il est dépendant du courant direct multiplié par le sinus de la différence de position angulaire $\Delta\theta$.

Ainsi, en injectant un courant direct $I_d$ dans la boucle fermée, l'estimateur d'angle adaptatif va avec par le biais de calculs, adapté l'angle angulaire pour que ce dernier correspond jusqu'à ce que le Sinus de la différence de position angulaire $\Delta\theta$ soit égal à 0.

Dans l'art antérieur, l'estimateur d'angle calcule la position angulaire à partir de la FEM, cependant comme l'amplitude de la force électromotrice est directement liée à la vitesse de rotation de la machine électrique, la détectabilité de la position électrique s'estompe avec la réduction de l'amplitude des forces électromotrices en fonction de la vitesse de rotation de la machine électrique. A vitesse de rotation nulle (à l'arrêt), la force électromotrice est nulle (non détectable) et la FEM de la machine électrique est donc non observable. Autrement dit, les méthodes basées sur la force électromotrice ne sont pas d'utilité de l'arrêt à une vitesse permettant à un ratio entre le fondamental de la force électromotrice et le bruit de mesure d'être suffisamment élevée pour permettre d'identifier la position angulaire.

Le flux rotorique lui reste constant et est non nul et influe selon sa rotation sur le flux statorique. Ainsi, l'invention permet une estimation de la position rotorique basée sur le flux statorique exprimé dans le référentiel rotorique. L'invention permet une approche d'estimation de la position rotorique de la machine synchrone à aimants permanents, basée sur un observateur de flux statorique de type non linéaire et qui est adaptative en fonction de l'évolution de la vitesse de rotation. A faible vitesse et à l'arrêt, l'estimation est augmentée par une injection de courant non nul sur l'axe direct dans le repère de Park.

L'invention a ainsi une logique de gestion du démarrage de la machine électrique qui est faite par une injection d'une valeur non nulle de la composante directe du vecteur courant dans l'espace rotorique de la machine électrique. Cette logique de gestion permet ainsi d'ajouter une consigne de courant sur l'axe directe du courant, notée $i_d$ comme différent de zéro (non nul), permettant à l'estimateur d'angle de calculer la position angulaire à partir du flux statorique et non de la FEM comme dans l'art antérieur et d'obtenir la position angulaire en éliminant une erreur de position angulaire entre le plan rotorique réel de la machine électrique et le plan rotorique virtuel de la commande .

Une autre composante de l'algorithme de commande proposée dans cette invention, est constituée d'un estimateur d'angle adaptatif qui a un rôle d'annuler une erreur angulaire entre un repère réel de la machine et un repère virtuel de la commande. Cette erreur angulaire, notée ε, n'est autre que l'écart entre un flux statorique dit de référence et un flux statorique estimé. En effet, l'estimateur d'angle calcule au moins une donnée du vecteur flux statorique de référence là partir des courants statoriques mesurées. Le flux statorique estimé, est calculé par l'estimateur d'angle de manière adaptative qui calcule au moins une donnée de vecteur de flux statorique en fonction des tensions de commande $v_{dq}^{\#}$ , des courants statoriques mesurées et en fonction d'une action de rétroaction de la vitesse de rotation estimée. L'action de rétroaction de la vitesse de rotation estimée est déduite par un mécanisme adaptatif d'élimination de l'erreur de position rotorique.

Autrement dit, une vitesse de rotation électrique correcte n'est obtenue que si le vecteur flux statorique estimé tend vers le vecteur flux statorique de référence.

Une simple intégration de l'information de la vitesse de rotation permet ensuite de déduire la position rotorique notée $\hat{\theta}_{elec}$.

En outre un tel procédé fonctionne dans les deux sens de rotation de la machine électrique, que ce soit dans le sens trigonométrique positif ou négatif (sens horaire) puisqu'on peut prendre injecter un courant direct $I_d$ avec un signe positif ou négatif selon le sens de rotation du rotor.

Outre les caractéristiques qui viennent d'être évoquées dans le paragraphe précédent, le procédé selon un aspect de l'invention peut présenter une ou plusieurs caractéristiques complémentaires parmi celles décrites dans les paragraphes suivants, considérées individuellement ou selon toutes les combinaisons techniquement possibles :
Selon un mode de réalisation, l'au moins une donnée du vecteur de flux statorique de référence est la valeur quadratique et l'au moins une donnée du vecteur de flux statorique quadratique est la valeur quadratique.

Selon un autre mode de réalisation, l'estimateur d'angle adaptatif en boucle fermé, est configuré pour estimer la valeur de position angulaire estimée du rotor en se basant sur une différence entre le vecteur (les données direct ou/et quadratique ou/et angle) de flux statorique de référence calculée en fonction des courants de retour, et le vecteur (les données direct ou/et quadratique ou/et angle) de flux statorique adaptatif, calculée à partir de la consigne de tension, des courants de retour, et d'une vitesse électrique estimée calculée en fonction de cette différence.

Selon un mode de réalisation, l'estimateur d'angle adaptatif comprend :

- un premier calculateur de flux statorique comprenant :

  - un premier bloc de calcul du flux quadratique statorique de référence,

  - un deuxième bloc de calcul, du flux statorique quadratique adaptatif,

- un deuxième calculateur d'une vitesse électrique estimée en fonction d'une comparaison du flux statorique quadratique adaptatif et du flux statorique quadratique de référence,

- un troisième calculateur d'estimation d'une valeur de position angulaire estimée du rotor en fonction de la vitesse électrique estimée calculée.

Selon un exemple ce mode de réalisation, le premier bloc de calcul de flux statorique de référence est modélisé dans un référentiel rotorique.

Selon un exemple de ce mode de réalisation, le deuxième bloc de calcul adaptatif de modèle de flux statorique est modélisé dans le référentiel rotorique.

Selon un exemple de ce mode de réalisation, le premier bloc de calcul calcule le flux quadratique de référence est calculé selon la formule : LqIq dans lequel Lq est la valeur quadratique de l'inductance statorique sur l'axe q, Iq est le courant quadratique de retour.

Selon un exemple de ce mode de réalisation, , le deuxième bloc de calcul, calcule le flux statorique quadratique adaptatif selon l'intégrale de la formule suivant :

[Math 3]

$$v_q - R_s i_q - \widehat{\omega}_{elec}\hat{\lambda}_{d_v} + \mathrm{k}\tilde{\imath}_q$$

dans lequel $R_s$ est la résistance statorique, $\hat{\lambda}_{d_v}$ est le flux statorique direct adaptatif égal à l'intégral de la formule suivante :

[Math 4]

$$v_d - R_s i_d + \widehat{\omega}_{elec}\hat{\lambda}_{q_v} + \mathrm{k}\tilde{\imath}_d$$

et K est une matrice de gain positif, $v_q$ est la tension quadratique de a tension de consigne en sortie du régulateur de courant, $I_q$ (noté parfois Iq) est le courant quadratique de retour, $\hat{\omega}_{elec}$ est la vitesse électrique estimée, $\tilde{\imath}_d$ et $\tilde{\imath}_q$ sont les composantes direct et quadratique de l'erreur en courants avec

[Math 5]

$$\tilde{\imath}_d = i_d - \hat{\imath}_d$$
$$\tilde{\imath}_q = i_q - \hat{\imath}_q$$

et dans lequel le courant estimé direct $\hat{\imath}_d$ et le courant estimé quadratique $\hat{\imath}_q$ sont calculé en fonction de :

[Math 6]

$$\hat{\imath}_d = \frac{\hat{\lambda}_{d_v} - \varphi_{PM}}{L_d}$$

$$\hat{\imath}_q = \frac{\hat{\lambda}_{q_v}}{L_q}$$

Selon un mode de réalisation, le modificateur du courant direct de consigne comprend une entrée de commande d'un courant de consigne.

Selon un mode de réalisation, le modificateur du courant direct de consigne calcule un courant direct de consigne pour régulateur égal à la racine carrée de la somme d'une valeur du courant quadratique maximum au carré avec la valeur du courant quadratique de consigne, reçue dans le courant de consigne :

[Math 7]

$$I_{d'}^{\#} = \sqrt{Iqmax^2 - I_q^{\#2}}.$$

Selon un exemple de ce mode de réalisation, le calcul du courant direct de consigne modifié est imposé avec le même signe que la vitesse électrique estimée reçue.

Selon un mode de réalisation, le modificateur du courant direct de consigne comprend un comparateur pour comparer la valeur absolue de la vitesse électrique estimée à la vitesse prédéterminée seuil.

Selon un mode de réalisation, le dispositif de commande est apte à commander le convertisseur pour une vitesse de rotation au-delà de la vitesse prédéterminée seuil, dans lequel si la valeur absolue de la vitesse électrique estimée est supérieure à la vitesse prédéterminée seuil, le modificateur du courant direct de consigne transmet le courant de consigne pour régulation selon uniquement le courant de consigne.

Selon un exemple de ce mode de réalisation, lorsque la valeur absolue de la vitesse électrique estimée est supérieure à la vitesse prédéterminée seuil, le modificateur du courant direct de consigne transmet le courant de consigne avec un courant direct de consigne égal à zéro, sauf si une consigne de défluxage est envoyée.

Selon un exemple de ce mode de réalisation, si la valeur absolue de la vitesse électrique estimée est supérieure à la vitesse prédéterminée seuil, l'estimateur de position angulaire estime la position et la vitesse angulaire à partir d'une force électromotrice Fem mesurée.

Selon un mode de réalisation, l'unité de calcul comprend une sortie de commande MLI apte à se connecter au convertisseur pour commander ses interrupteurs électroniques et en ce que l'unité de calcul est apte à transformer le signal de la transformé inverse de Park de la consigne de tension reçue en un signal de modulation de largeur d'impulsions.

Selon un mode de réalisation, le deuxième calculateur comprend un comparateur comparant le flux quadratique statorique de référence au flux quadratique adaptatif et en ce que la vitesse électrique calculée estimée est transmis au premier calculateur du flux statorique, formant une boucle fermée.

Selon un mode de réalisation, le deuxième calculateur comprend une boucle à phase asservie, (en anglais, phase-locked loop, ou PLL) permettant à partir de la valeur de comparaison entre le flux quadratique statorique de référence et le flux statorique quadratique adaptatif, de calculer une valeur de vitesse électrique.

Selon un mode de réalisation, le troisième calculateur calcule une estimation d"angle du rotor en réalisant l'intégrale de la vitesse électrique estimée. Selon un exemple, la valeur de position angulaire estimée du rotor est une position angulaire électrique.

Selon un mode de réalisation, le dispositif de commande comprend en outre une entrée de mesure de courant par phase de la machine électrique, destinée à être reliée à un capteur de courant mesurant le courant sur la ligne de phase d'alimentation correspondante.

Selon un mode de réalisation, l'unité de calcul comprend une entrée de consigne de tension reçue du régulateur de courant et est adaptée à être reliée au convertisseur onduleur pour lui transmettre une commande par modulation de largeur d'impulsion qui permet de piloter les interrupteurs de puissance électronique du convertisseur à une fréquence de découpage spécifique et ainsi piloter le fondamental de la tension statorique vue en entrée de la machine électrique pour le pilotage de la machine électrique.

Selon un mode de réalisation, l'estimateur d'angle adaptatif transmet la vitesse électrique estimée au régulateur de courant, notamment dans un bloc de régulateurs de courant PI.

Selon un mode de réalisation, le dispositif de commande comprend un processeur et une mémoire et en ce que la boucle de régulation, l'estimateur d'angle adaptatif et le modificateur de consigne sont intégré dans un programme mis en œuvre par le processeur à partir de la mémoire.

Un autre aspect de l'invention concerne une machine comprenant :

- un moteur électrique synchrone comprenant un rotor, un stator,

- un capteur de mesure de courant,

- un convertisseur onduleur comprenant des interrupteurs de puissance et

- le dispositif de commande décrit précédemment avec ou sans les différents modes de réalisation décrits précédemment, dans lequel l'unité de calcul transmet une commande au convertisseur à partir de la consigne de tension pour piloter les interrupteurs de puissance électronique à une fréquence de découpage spécifique et ainsi piloter le fondamental de la tension statorique vue en entrée de la machine électrique pour le pilotage du moteur électrique .

Un autre aspect de l'invention concerne un procédé de pilotage en boucle fermée sans capteur de position d'une machine synchrone, du démarrage jusqu'à un régime de rotation maximale comprenant les étapes de :

- modification d'une consigne de courant reçue en imposant un courant direct de consigne modifié non nul tant qu'une vitesse estimée est inférieure à une valeur de vitesse prédéterminée seuil,

- calcul d'une consigne de tension comprenant une tension quadratique et direct avec un angle, à partir d'une consigne de courant pour régulation comprenant un courant direct de consigne modifié,

- calcul d'une commande pour piloter des interrupteurs de puissance électronique du convertisseur onduleur à une fréquence de découpage spécifique et ainsi piloter le fondamental de la tension statorique vue en entrée de la machine électrique, par une transformation de Park inverse de la consigne de tension et d'une valeur de position angulaire estimée du rotor,

- mesure des courants des phases et les transformer dans un repère de Park, en courant quadratique de retour et en courant direct de retour, en prenant en compte la valeur de position angulaire estimée du rotor,

- calcul d'un flux quadratique statorique de référence en fonction du courant du courant quadratique de retour, du courant direct de retour, de la sortie de retour de courant et d'une fréquence électrique calculée,

- calcul de flux statorique quadratique adaptatif, à partir de la consigne de tension, du courant quadratique de retour, du courant direct de retour, et de la vitesse électrique calculée estimée,

- calcul d'une vitesse électrique du rotor à partir d'une comparaison du flux statorique quadratique adaptatif et du flux statorique quadratique de référence,

- calcul la valeur de position angulaire estimée du rotor en fonction de la vitesse électrique estimée calculée.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

[Fig. 1] montre une représentation d'un schéma de principe avec des blocs fonctionnelles d'une machine électrique comprenant un dispositif de commande selon un mode de réalisation de l'invention.

[Fig. 2] montre une représentation schématique d'un estimateur d'angle adaptatif du dispositif de commande selon un exemple d'un mode de réalisation de l'invention.

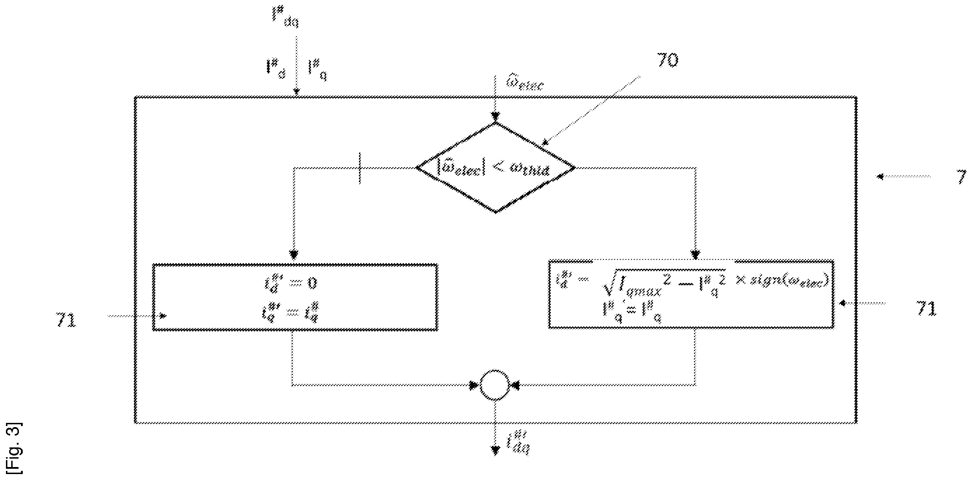

[Fig. 3] montre une représentation schématique d'un modificateur d'un courant direct de consigne d'un courant de consigne du dispositif de commande selon un exemple d'un premier mode de réalisation de l'invention.

[Fig. 4a] montre une représentation schématique de différent graphique représentant différentes mesures d'un moteur ayant une vitesse de rotation diminuant.

[Fig. 4b] montre une représentation schématique d'un agrandissement d'un des graphiques de la figure 4a, représentant la mesure de position réel et estimé d'un moteur.

## DESCRIPTION DETAILLEE

Les figures sont présentées à titre indicatif et nullement limitatif de l'invention.

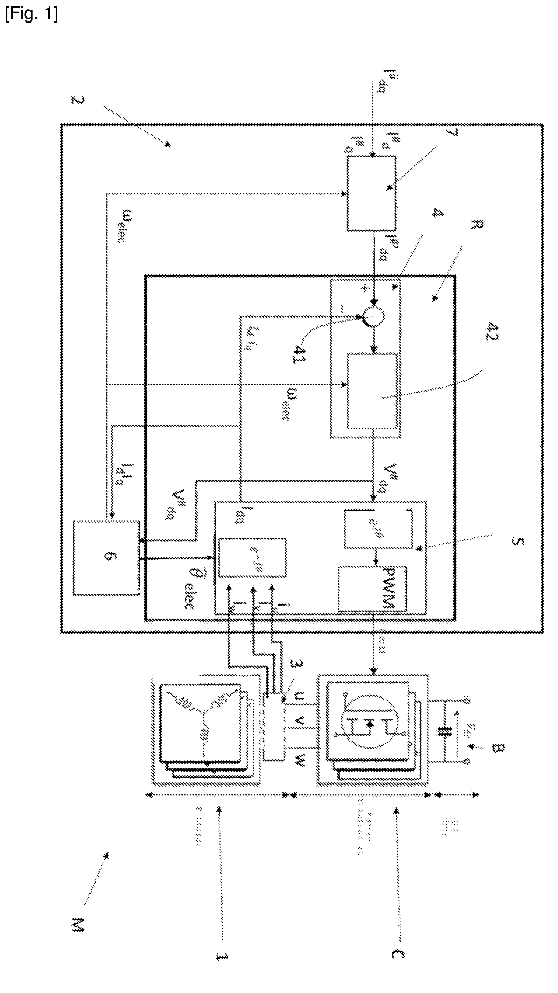

La figure 1 représente un schéma de principe avec des blocs fonctionnelles d'une machine électrique M comprenant un moteur électrique synchrone 1, un convertisseur onduleur C alimentant des phases du moteur électrique synchrone 1, une batterie B et un dispositif de commande selon un mode de réalisation de l'invention commandant le convertisseur onduleur C.

La machine électrique M peut être une machine d'une turbomachine, dans lequel le moteur électrique 1 comprend un stator comprenant X phases, un rotor entouré par le stator. Le moteur électrique 1 peut fonctionner en mode moteur ou/et dans un mode générateur. La machine électrique M est par exemple une machine électrique synchrone multi-phasée d'un propulseur d'un aéronef. Le rotor comprend un arbre et une partie active montée sur l'arbre. La partie active du rotor comprend des aimants formant P paires de pôles. Le nombre X dans cet exemple est de trois, mais pourrait être supérieur par exemple cinq ou six. Le stator comprend donc dans cet exemple trois bobinages formant trois sorties de phases U, V, W de trois phases qui sont représentés sur la figure 1, comme couplées en étoiles mais pourrait par exemple être couplées en triangle.

Le convertisseur onduleur C est dans cet exemple un onduleur à source d'entrée tension continue soit un convertisseur DC/AC ou encore un convertisseur onduleur réversible c'est-à-dire AC/DC et DC/AC dans cas ou la machine électrique M permet en outre le mode générateur. Le convertisseur onduleur C comprend N sorties, en l'occurrence trois sorties reliées chacune à une des sorties de phases U, V, W correspondantes. Le convertisseur onduleur C comprend en outre des entrées de puissances, en l'occurrence deux potentiels pour la tension continue reliés aux bornes d'un bus de tension continu B. Le convertisseur onduleur C comprend des interrupteurs de puissance électronique et une entrée de consigne de commande, en l'occurrence une commande par modulation de largeur d'impulsion qui permet de piloter les interrupteurs de puissance électronique à une fréquence de découpage spécifique et ainsi piloter le fondamental de la tension statorique vue en entrée de la machine électrique pour le pilotage du moteur électrique 1 de la machine électrique.

La machine électrique M comprend en outre un moyen de mesure 3 pour mesurer des courants de phases Iu, Iv, Iw circulant sur les sorties de phases U, V, W. Le moyen de mesure 3 comprend par exemple un capteur de courant par phase pour mesurer le courant dans la phase correspondante.

Le dispositif de commande 2 comprend une boucle de régulation R représenté de façon schématique selon un exemple, comprenant un régulateur de courant 4 comprenant une entrée de consigne de courants d'une consigne de courant pour régulation $I^{\#}_{dq}$' comprenant un courant direct de consigne $I^{\#}_{d}$' modifié, expliqué dans la suite. La consigne de courant pour régulation $I^{\#}_{dq}$' comprend en outre un courant quadratique et un angle a.

Le régulateur de courant 4 comprend une sortie de consigne de tension $V^{\#}_{dq}$ comprenant une tension de consigne direct et une tension de consigne quadratique.

La boucle de régulation R comprend en outre une unité de calcul 5 utilisant une méthode mathématique connue, à savoir la transformée dite « de Park », directe pour passer d'un repère triphasé U ; V ; W lié au stator à un repère tournant biphasé d ; q en connaissant également la position angulaire $\theta$ du rotor du moteur électrique 1 par rapport à son stator, ainsi que la transformée de Park inverse pour passer du repère de Park d ;q au repère triphasé U ; V ; W en utilisant aussi une position angulaire du rotor. La position angulaire $\theta$ du rotor du c'est la position de l'axe d dans le repère dq, du rotor par rapport à l'axe magnétique de référence (qui est l'axe horizontal dans (abc) qui est fixe. Le repère dq étant rotationnel. Ainsi, entre les deux repères, il y a un angle qui varie de 0 à 360°. C'est la position du rotor dans l'espace.

L'unité de calcul 5 comprend une entrée de consigne de tension reliée à la sortie du régulateur 4 pour transformer la consigne de tension $V^{\#}_{dq}$, avec un calculateur de transformation inverse et de commande, et une sortie de commande reliée à l'entrée de commande du convertisseur onduleur C, pour transmettre une commande PWM calculée par le calculateur de transformation direct, en l'occurrence en modulation de largeur d'impulsion. Le calculateur de transformation Park inverse et de commande est donc configurée pour transformer les vecteurs des tensions de consigne direct et quadratique dans un plan de Park à partir d'une valeur de position angulaire estimée du rotor ($\hat{\theta}elec$) expliquée dans suite, en une commande PWM modulation de largeur d'impulsion. La commande PWM modulation de largeur d'impulsion comprend des signaux de tension électrique, pour commander chaque phase en modulation de largeur d'impulsion et ainsi générer un système de tensions alternatives triphasé équilibré.

L'unité de calcul 5 comprend en outre des entrées de courant mesuré recevant les courants de phases $i_u$, $i_v$, $i_w$ mesurés, les entrées de courant mesuré sont reliées au moyen de mesure 3, et une sortie de retour de courant quadratique Iq (noté parfois $I_q$) et direct Id (noté parfois $I_d$) reliée à l'entrée de retour du régulateur de courant 4.

L'unité de calcul 5 comprend en outre une entrée de position angulaire estimée recevant la valeur de position angulaire estimée du rotor $\hat{\theta}$*elec* expliquée dans la suite, et un calculateur de transformateur de Park configuré pour transformer les courants mesurées Iu, Iv, Iw suivant valeur de position angulaire estimée du rotor $\hat{\theta}$*elec* reçu en composante sur l'axe quadratique du vecteur courant appelé dans la suite courant quadratique Iq, et la composante sur l'axe directe du vecteur courant direct Id dans un plan de Park, appelé aussi dans la suite courant direct Id de retour.

Dans la demande, chaque référence dans la suite avec « ^ » est une valeur estimée.

Le courant direct de retour Id est donc dans la suite la composante directe du courant statorique dans le plan de Park calculée à partir des courants statoriques mesurés.

Le courant quadratique Iq de retour est donc dans la suite la composante quadratique du courant statorique dans le plan de Park calculée à partir des courants statoriques mesurés.

Le régulateur de courant 4 comprend des sommateurs 41 (représenté par un seul sommateur sur la figure 1), recevant en entrée non inverseuse le vecteur du courant quadratique de consigne $I^{\#}_{q'}$ et le vecteur de courant direct de consigne $I^{\#}_{d}$' modifié et en entrée inverseuse le vecteur de courant quadratique de retour Iq ainsi que le vecteur de courant direct de retour Id.

En sortie des sommateurs 41, le régulateur 4 comporte une ligne sur laquelle circule l'écart entre le courant quadratique de consigne $I^{\#}_{q'}$ et le courant quadratique de retour Iq ainsi que sur une autre ligne le courant direct de consigne $I^{\#}_{d}$' et le courant direct de retour Id. Les deux lignes sont représentées par une seule ligne. Le régulateur de courant 4 comprend un bloc de régulateurs de courant PI (proportionnel intégral) 42 reliées aux lignes d'écart et délivrant la consigne de tension $V^{\#}_{dq}$ comprenant des tensions quadratiques et des tensions directs.

Le dispositif de commande 2 comprend en outre de la boucle de régulation R un estimateur d'angle adaptatif 6 en boucle fermé, pour estimer une valeur de position angulaire estimée du rotor $\hat{\theta}$*elec,* en particulier du démarrage de la machine électrique (vitesse de rotation du rotor = 0) à la vitesse prédéterminée seuil. La boucle de régulation R peut comprendre un estimateur d'angle selon la force électromotrice non représenté, lequel est utilisé alors au-delà de la vitesse prédéterminée.

Dans cet exemple de ce mode de réalisation, la vitesse est la vitesse électrique (volts/s) mais pourrait être la vitesse de rotation du rotor. La vitesse prédéterminée seuil est par exemple, la vitesse nécessaire pour le fonctionnement de l'estimateur d'angle selon la force électromotrice. Par exemple la vitesse prédéterminée seuil est une vitesse électrique correspondant à une valeur de vitesse de rotation du rotor à 500tr/min. Un angle électrique = angle mécanique du rotor multiplié par le nombre de pair de pôle.

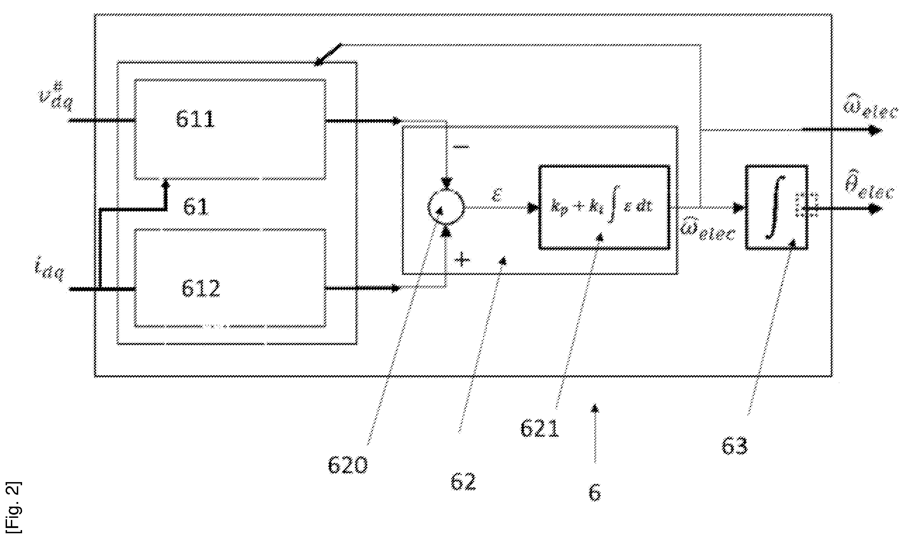

L'estimateur d'angle adaptatif 6, représenté en détail sur la figure 2, en boucle fermé comprend un premier calculateur de flux statorique 61. Le premier calculateur de flux statorique 61 comprend deux blocs de calcul pour calculer un flux quadratique statorique de référence λq calculé à partir de valeur mesurée et de constante prédéterminée et un flux statorique quadratique adaptatif λqv différent du flux quadratique statorique de référence λq en ce qu'il est dépendant en outre de la tension de consigne V#dq calculée.

Le premier calculateur de flux statorique 61 comprend donc un premier bloc de calcul, 611 du flux quadratique statorique de référence λq en fonction du courant quadratique de retour $I_q$. En particulier dans cet exemple de ce mode de réalisation, le flux quadratique statorique de référence λq est calculé selon la formule : LqIq dans lequel $L_q$ est l'inductance statorique sur l'axe q. Dans cet exemple, l'inductance statorique $L_q$ est une valeur prédéterminée, ici on suppose que la variation des inductances en fonction du courant est négligeable, c'est-à-dire que le stator ne présente pas de saturation magnétique (inductance qui chute fortement quand le courant statorique augmente en amplitude). Les inductances sont considérées comme des inductances apparentes (donc quasi constante pour un point de courant donné) ou le lien entre le flux et le courant reste linéaire via cette inductance : L = flux/courant → une droite croissante.

Le premier calculateur de flux statorique 61 comprend donc aussi un deuxième bloc de calcul 612 du flux statorique quadratique adaptatif λqv, qui peut aussi être appelé observateur de flux adaptatif, à partir de la consigne de tension V#dq, du courant quadratique de retour $I_q$, du courant direct de retour $I_d$, et de la vitesse électrique calculée estimée $\hat{\omega}_{elec}$.

En particulier dans cet exemple de ce mode de réalisation, le flux statorique quadratique adaptatif λqv est calculé par l'intégrale de la formule suivant :

[Math 8]

$$v_q - R_s i_q - \widehat{\omega}_{elec}\hat{\lambda}_{d_v} + \boldsymbol{k}\tilde{\imath}_q$$

dans lequel $R_s$ est la résistance statorique, $\hat{\lambda}_{dv}$ est le flux statorique direct adaptatif égal à l'intégral de la formule suivante :

## [Math 9]

$$v_d - R_s i_d + \widehat{\omega}_{elec} \hat{\lambda}_{q_v} + \boldsymbol{k}\tilde{\imath}_d$$

et en ce que K est une matrice de gain positif.

$\tilde{\imath}_d$ et $\tilde{\imath}_q$ sont les composantes direct et quadratique de l'erreur en courants avec

## [Math 10]

$$\tilde{\imath}_d = i_d - \hat{\imath}_d$$
$$\tilde{\imath}_q = i_q - \hat{\imath}_q$$

et dans lequel le courant estimé direct $\hat{\imath}_d$ et le courant estimé quadratique $\hat{\imath}_q$ sont calculé en fonction de :

## [Math 11]

$$\hat{\imath}_d = \frac{\hat{\lambda}_{d_v} - \varphi_{PM}}{L_d}$$

$$\hat{\imath}_q = \frac{\hat{\lambda}_{q_v}}{L_q}$$

Le premier calculateur de flux statorique 61 a pour rôle de permettre d'obtenir des valeurs du flux quadratique de référence $\lambda_q$ qui a pour variable des courants de retour qui est fonction de courant mesuré et d'une position angulaire estimé, et le flux statorique quadratique adaptatif λqv qui a en outre comme variable la consigne de tension V#dq et la vitesse électrique calculée afin de les différentier pour permettre ainsi d'identifier une erreur d'estimation de positionnement.

L'estimateur d'angle adaptatif 6, comprend donc un deuxième calculateur 62 d'une vitesse électrique estimée $\hat{\omega}_{elec}$ en fonction de la comparaison du flux statorique quadratique adaptatif λq et du flux statorique quadratique de référence λq. Le deuxième calculateur 62 comprend donc un comparateur 620 comprenant en l'occurrence dans cet exemple en entrée négative, le flux statorique quadratique de référence λq et en positif le flux statorique quadratique adaptatif λq et en sortie, une valeur de comparaison ε représentant la différence entre les deux flux calculés. Le deuxième calculateur 62 comprend en outre une boucle à phase asservie 621, (en anglais, phase-locked loop, ou PLL) permettant à partir de la valeur de comparaison entre le flux quadratique statorique de référence et le flux statorique quadratique adaptatif, de calculer une valeur de vitesse électrique estimée $\hat{\omega}_{elec}$.

L'estimateur d'angle adaptatif 6 comprend en outre un troisième calculateur permettant à partir des valeurs de vitesse électrique estimées $\hat{\omega}_{elec}$, le calcul de la position électrique d'une valeur de position angulaire estimée du rotor $\hat{\theta}elec$. La valeur de position angulaire estimée du rotor $\hat{\theta}elec$ étant transmise à l'unité de calcul 5. La valeur de position angulaire estimée du rotor $\hat{\theta}elec$ est estimée à chaque instant t en fonction de l'intégrale des valeurs de vitesse électrique estimées $\hat{\omega}_{elec}$.

Le dispositif de commande 2 comprend en outre un modificateur 7 d'un courant direct de consigne I#d d'un courant de consigne I#dq reçu par une entrée. Le modificateur 7 permet ainsi du démarrage à la vitesse la vitesse prédéterminée seuil de modifier le courant direct de consigne I#d en un courant direct de consigne pour régulateur I#d' non nulle transmis dans au régulateur de courant. En particulier le modificateur 7 comprend un comparateur 70 de la valeur absolue de la vitesse électrique estimée $\hat{\omega}_{elec}$ reçue par l'estimateur d'angle adaptatif 6 avec la vitesse prédéterminée seuil. Si la vitesse électrique estimée $\hat{\omega}_{elec}$ est inférieure à la vitesse prédéterminée seuil, le modificateur 7 comprend un bloc de calcul 71 calculant le courant direct de consigne pour régulateur I#d' ayant une valeur non nulle et le transmet au régulateur de courant 4. En l'occurrence, dans cet exemple, le bloc de calcul 71 calcule le courant direct de consigne pour régulateur I#d' égal au signe de la vitesse électrique estimé $\hat{\omega}_{elec}$ (pour déterminer le sens de rotation du rotor) multiplié par un le maximum de deux termes qui sont les suivants :

Le premier terme, noté $\mu i_q^{\#}$, constitue une proportion de la composante quadratique de consigne de courant.

Le second terme, est la racine carrée de la différence entre la valeur au carrée de l'amplitude maximale des courants statoriques que l'onduleur de tension peut supporter (notée Ipeak) et la valeur au carrée de la composante quadratique de la consigne de courant :

$$[Math 12]$$

$$\left( \sqrt{I_{peak}^2 - i_q^{\#2}} \right)$$

Selon un autre exemple, le courant direct de consigne pour régulateur $I^\#_{d'}$ est un courant direct prédéterminé.

Le courant de consigne $I^\#_{dq}$ peut provenir d'une unité de contrôle du propulseur ou de plusieurs propulseurs transmettant la consigne en courant direct de consigne $I^\#_d$ et en courant quadratique de consigne $I^\#_q$ avec un angle a au modificateur 7.

Dans cet exemple, le modificateur 7 transmet aussi le courant quadratique de consigne pour régulateur $I^\#_{q'}$ qui est égal au courant quadratique de consigne $I^\#_q$, ce dernier peut être transmis directement au régulateur de courant 4.

Dans ce mode de réalisation, le dispositif de commande est apte à commander le convertisseur pour une vitesse de rotation au-delà de la vitesse prédéterminée seuil. Le modificateur 7 de courant de consigne transmet le courant de consigne pour régulation $I^\#_{dq'}$ selon uniquement le courant de consigne $I^\#_{dq}$ si la valeur absolue de la vitesse électrique estimée $\hat{\omega}_{elec}$ est supérieure à la vitesse prédéterminée seuil.

Dans ce mode de réalisation, le courant de consigne $I^\#_{dq}$ comprend un courant direct de consigne $I^\#_d$ égal à zéro. Selon un autre exemple, dans le cas où le courant direct de consigne $I^\#_d$ est différent de Zéro, pour une vitesse de rotation au-delà de la vitesse prédéterminée seuil, le modificateur 7 de courant de consigne impose à zéro le courant direct de consigne pour régulateur $I^\#_{d'}$ sauf en cas de commande défluxage.

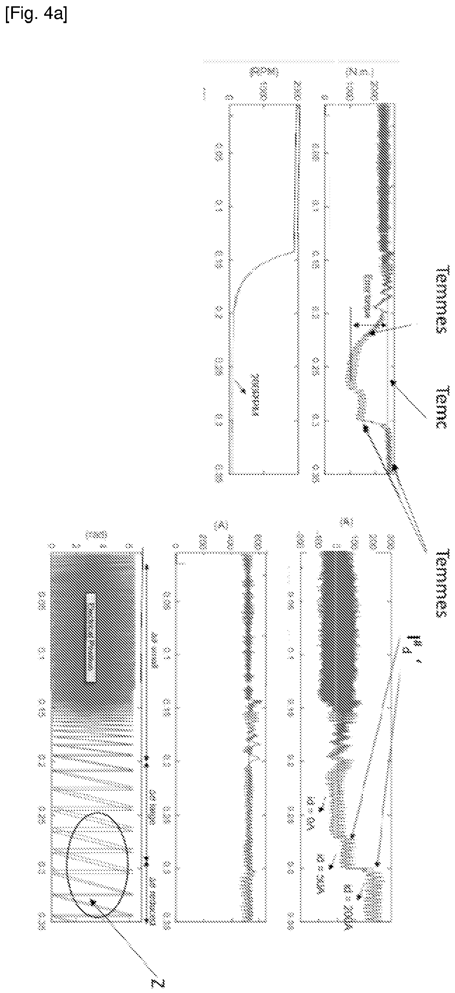

La figure 4a représente différents graphiques temporels montrant les performances du dispositif de commande selon l'invention.

La colonne 1, ligne 2 représente la vitesse en fonction du temps dans lequel, la vitesse diminue à partir de 0.15 (t) de 2000tr/min à 200 tr/min stabilisé de 0.2 à 0.35 (t), (t) étant une unité de temps.

La colonne 1, ligne 1 représente une courbe du couple de consigne Temc en fonction du temps et une courbe du couple mesuré Temmes, dans lequel le couple de consigne est à 2500N.m entre 0(t) et 0.3(t) et une courbe du couple mesuré Temc égal à K Iq qui commence à s'écarter du couple réel entre 0.2(t) et 0.3(t) et ensuite entre 0.3(t). Cet écartement est lié à une erreur de position angulaire dans la commande.

La colonne 2, ligne 1 représente le courant direct de consigne pour régulateur $I^\#_{d'}$ dans lequel entre 0.25(t) et 0.3 (t) on modifie le courant de courant direct de consigne pour régulateur $I^\#_{d'}$= 50Amp puis de 0.3 (t) à 0.35 (t) = 200Amp.

La colonne 2, ligne 2 représente le courant quadratique de consigne pour régulateur $I^\#_{q'}$ qui est régulier autour de 550 Ampères.

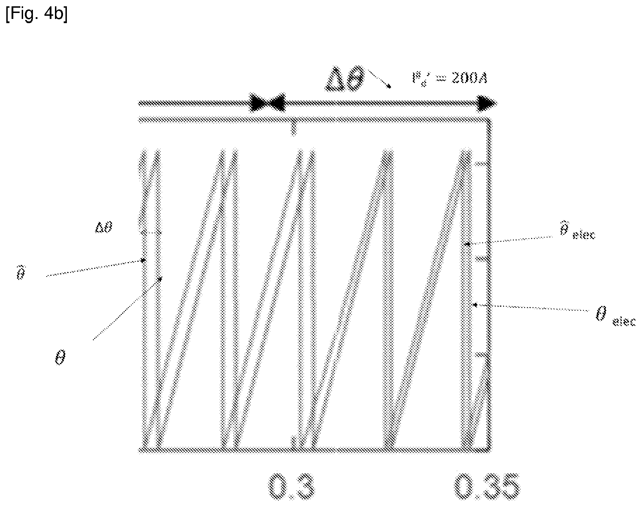

La colonne 2, ligne 2 représente la position angulaire du rotor réel θ par rapport à la position angulaire du rotor calculé θ (fonction de la position angulaire électrique $\theta elec$ et du nombre de pôle dans le rotor). La figure 4b représente un agrandissement de ce graphique dans la zone Z, de la position angulaire du rotor réel θ par rapport à la position angulaire du rotor calculé $\hat{\theta}$ entre 0.25(t) et 0.35(t). On peut voir sur cette figure, une différence de position angulaire $\Delta\theta$ importante vers 0.25 qui diminue légèrement vers 0.3 puis qui diminue fortement de 0.3 à 0.35.

Ainsi, le fait que le modificateur 7 de courant direct modifie le courant direct de consigne $I^\#_{d'}$ de 0 à 50 Ampères réduit très peu l'erreur de position angulaire (différence de position angulaire $\Delta\theta$) mais en modifiant de façon importante le courant direct de consigne $I^\#_{d'}$ de 0 à 200Ampères, l'erreur de position se réduit significativement. Comme expliqué précédemment, le couple réel Tem est égal à la somme du couple estimé $\hat{T}_{em}$ = KIq et de $K_t\hat{i}_d\sin(\Delta\theta)$, mais comme $\sin(\Delta\theta)$ tend vers 0 lorsqu'il n'y a pas d'erreur de position, le produit $K_t\hat{i}_d\sin(\Delta\theta)$, tend vers zéro et ainsi $T_{em} = K_t\hat{i}_q$ sans erreur de position angulaire comme cela est visible sur la ligne 1 colonne 1 de 0.3(t) à 0.35(t).

Ainsi, le dispositif de commande de l'invention permet d'estimer une position angulaire d'un rotor d'un moteur synchrone couplé à une charge avec un couple qui peut être important, de l'arrêt (démarrage) jusqu'à une vitesse prédéterminée de seuil, par exemple 1000tr/min. Au-delà de la vitesse prédéterminée de seuil, le dispositif de commande peut calculer la position angulaire du rotor et la vitesse de rotation peuvent selon le flux par l'estimateur d'angle adaptatif 6, mais avec un courant direct de consigne pour régulateur égal à zéro ou par un autre estimateur de position angulaire calculant la position selon la force électromotrice comme dans l'at antérieur.

Sauf précision contraire, un même élément apparaissant sur des figures différentes présente une référence unique.

**Revendications**

1. Dispositif de commande (2) d'un convertisseur onduleur (C) pour le démarrage d'un moteur électrique (1) synchrone multi-phasée jusqu'à une vitesse seuil prédéterminée, d'une machine électrique (M), le dispositif de commande comprenant :

   - une boucle de régulation (R), comprenant :

      o un régulateur de courant (4) pour délivrer une consigne de tension ($V^\#_{dq}$) comprenant une tension quadratique et direct avec un angle (a), à partir d'une consigne de courant pour régulation ($I^\#_{dq'}$),
      o une unité de calcul (5) pour calculer une transformation de Park direct et indirect, l'unité de calcul (5) comprenant une sortie de retour de courant ($I_{dq}$) dans un repère de Park, à partir de valeurs de mesures des courants des phases (Iu, Iv, Iw) reçues, transformées dans un repère de Park, en courant quadratique de retour ($I_q$) et en courant direct de retour ($I_d$), en prenant en compte une valeur de position angulaire estimée du rotor ($\theta elec$) reçue, **caractérisé en ce que** le dispositif de commande comporte en outre :

      - un estimateur d'angle adaptatif (6) en boucle fermé, pour estimer la valeur de position angulaire estimée du rotor ($\hat{\theta} elec$), en se basant sur une différence entre au moins une donnée d'un vecteur de flux statorique de référence ($\lambda_q$) calculée en fonction des courants de retour (Iq), et une donnée du vecteur de flux statorique adaptatif ($\lambda_{qv}$), calculée à partir de la consigne de tension ($V^\#_{dq}$), des courants de retour (Iq, $I_d$), et d'une vitesse électrique estimée ($\hat{\omega}_{elec}$) calculée en fonction de cette différence,
      - un modificateur (7) de courant de consigne, dans lequel, lorsqu'une valeur absolue de la vitesse électrique estimée ($\hat{\omega}_{elec}$) reçue par l'estimateur d'angle adaptatif (6) est inférieure à la vitesse prédéterminée seuil, le modificateur (7) calcule un courant direct de consigne pour régulateur ($I^\#_{d'}$) ayant une valeur non nulle, modifiant ainsi un courant direct de consigne ($I^\#_d$) d'un courant de consigne ($I^\#_{dq}$) reçu.

2. Dispositif de commande (2) d'un convertisseur onduleur (C) pour le démarrage d'un moteur électrique (1), selon la revendication précédente, dans lequel l'estimateur d'angle adaptatif (6) comprend :

   o un premier calculateur de flux statorique (61) comprenant :

      1. un premier bloc de calcul (611) du flux quadratique statorique de référence ($\lambda_q$),
      2. un deuxième bloc de calcul (612), du flux statorique quadratique adaptatif ($\lambda_{qv}$),

   o un deuxième calculateur (62) d'une vitesse électrique estimée ($\hat{\omega}_{elec}$) en fonction d'une comparaison du flux statorique quadratique adaptatif ($\lambda_q$) et du flux statorique quadratique de référence ($\lambda_q$),
   o un troisième calculateur (63) d'estimation d'une valeur de position angulaire estimée du rotor ($\hat{\theta} elec$) en fonction de la vitesse électrique estimée ($\hat{\omega}_{elec}$) calculée.

3. Dispositif de commande (2) d'un convertisseur onduleur (C) pour le démarrage d'un moteur électrique (1), selon la revendication précédente, le premier bloc de calcul (611) calcule le flux quadratique de référence ($\lambda_q$) selon la formule : $L_q I_q$ dans lequel $L_q$ est l'inductance statorique sur l'axe q.

4. Dispositif de commande (2) d'un convertisseur onduleur (C) pour le démarrage d'un moteur électrique (1), selon la revendication 2 ou 3, dans lequel, le deuxième bloc de calcul (612) calcule le flux statorique quadratique adaptatif ($\lambda_{qv}$) selon l'intégrale de la formule suivant : $v_q - R_s i_q - \hat{\omega}_{elec}\hat{\lambda}_{dv} + k\tilde{i}_q$ dans lequel $R_s$ est la résistance statorique, $\hat{\lambda}_{dv}$ est le flux statorique direct adaptatif égal à l'intégral de la formule suivante : $v_d - R_s i_d + \omega_{elec}\hat{\lambda}_{qv} + k\tilde{i}_d$ et K est une matrice de gain positif, $\tilde{i}_d$ et $\tilde{i}_q$ sont les composantes direct et quadratique de l'erreur en courants avec :

$$\tilde{i}_d = i_d - \hat{i}_d$$

$$\tilde{i}_q = i_q - \hat{i}_q$$

   o et dans lequel le courant estimé direct $\hat{i}_d$ et le courant estimé quadratique $\hat{i}_q$ sont calculé en fonction de :

$$\hat{\imath}_d = \frac{\hat{\lambda}_{d_v} - \varphi_{PM}}{L_d}$$

$$\hat{\imath}_q = \frac{\hat{\lambda}_{q_v}}{L_q}$$

**5.** Dispositif de commande (2) d'un convertisseur onduleur (C) pour le démarrage d'un moteur électrique (1) selon l'une des revendications précédentes 1 à 4, dans lequel le modificateur (7) du courant direct de consigne ($I^\#_d$) calcule un courant direct de consigne pour régulateur ($I^\#_{d'}$) égal à la racine carrée de la somme d'une valeur du courant quadratique maximum au carré avec la valeur du courant quadratique de consigne ($I^\#_q$), reçue dans le courant de consigne ($I^\#_{dq}$) : $I^\#_{d'} = \sqrt{Iqmax^2 - I^\#_q{}^2}$ .

**6.** Dispositif de commande (2) d'un convertisseur onduleur (C) pour le démarrage d'un moteur électrique (1) selon la revendication précédente, dans lequel le calcul du courant direct de consigne modifié ($I^\#_{d'}$) est imposé avec le même signe que la vitesse électrique estimée ($\hat{\omega}_{elec}$) reçue.

**7.** Dispositif de commande (2) d'un convertisseur onduleur (C) pour le démarrage d'un moteur électrique (1) selon l'une des revendications précédentes 1 à 6, dans lequel le modificateur (7) du courant direct de consigne ($I^\#_d$) comprend un comparateur pour comparer la valeur absolue de la vitesse électrique estimée ($\hat{\omega}_{elec}$) à la vitesse prédéterminée seuil.

**8.** Dispositif de commande (2) d'un convertisseur onduleur (C) pour le démarrage d'un moteur électrique (1) selon l'une des revendications précédentes 1 à 7, dans lequel le dispositif de commande est apte à commander le convertisseur pour une vitesse de rotation au-delà de la vitesse prédéterminée seuil, dans lequel si la valeur absolue de la vitesse électrique estimée ($\hat{\omega}_{elec}$) est supérieure à la vitesse prédéterminée seuil, le modificateur du courant direct de consigne transmet le courant de consigne pour régulation ($I^\#_{dq'}$) selon uniquement le courant de consigne ($I^\#_{dq}$).

**9.** Dispositif de commande (2) selon la revendication précédente, dans lequel lorsque la valeur absolue de la vitesse électrique estimée ($\hat{\omega}_{elec}$) est supérieure à la vitesse prédéterminée seuil, le modificateur (7) du courant direct de consigne ($I^\#_d$) transmet le courant de consigne ($I^\#_{dq}$) avec un courant direct de consigne ($I^\#_d$) égal à zéro, sauf si une consigne de défluxage est envoyée.

**10.** Dispositif de commande (2) selon la revendication 8 ou 9, dans lequel, dans lequel si la valeur absolue de la vitesse électrique estimée ($\hat{\omega}_{elec}$) est supérieure à la vitesse prédéterminée seuil, l'estimateur de position angulaire estime la position et la vitesse angulaire à partir d'une force électromotrice Fem mesurée.

**11.** Machine électrique synchrone comprenant :

- un moteur électrique comprenant un rotor et un stator,
- un capteur de mesure de courant,
- un convertisseur onduleur comprenant des interrupteurs de puissance et
- le dispositif de commande selon l'une des revendications précédentes, dans lequel l'unité de calcul transmet une commande au convertisseur à partir de la consigne de tension ($V^\#_{dq}$) pour piloter les interrupteurs de puissance électronique à une fréquence de découpage spécifique et ainsi piloter le fondamental de la tension statorique vue en entrée de la machine électrique pour le pilotage du moteur électrique (1) .

**12.** Procédé de pilotage en boucle fermée sans capteur de position d'une machine synchrone, du démarrage jusqu'à un régime de rotation maximale comprenant les étapes de :

- modification d'une consigne de courant reçue (I#dq) en imposant un courant direct de consigne modifié (I#d') non nul tant qu'une vitesse estimée ($\hat{\omega}$elec) est inférieure à une valeur de vitesse prédéterminée seuil,
- calcul d'une consigne de tension ($V^\#_{dq}$) comprenant une tension quadratique et direct avec un angle, à partir d'une consigne de courant pour régulation ($I^\#_{dq'}$) comprenant un courant direct de consigne ($I^\#_{d'}$) modifié,
- calcul d'une commande (PWM) pour piloter des interrupteurs de puissance électronique du convertisseur onduleur (C) à une fréquence de découpage spécifique et ainsi piloter le fondamental de la tension statorique vue en entrée de la machine électrique, par une transformation de Park inverse de la consigne de tension ($V^{\#}_{dq}$) et d'une valeur de position angulaire estimée du rotor ($\hat{\theta}$*elec),*

- mesure des courants des phases (Iu, Iv, Iw) et les transformer dans un repère de Park, en courant quadratique de retour (Iq) et en courant direct de retour ($I_d$), en prenant en compte la valeur de position angulaire estimée du rotor ($\hat{\theta}$*elec),*

- calcul d'un flux quadratique statorique de référence ($\lambda_q$) en fonction du courant du courant quadratique de retour ($I_q$), du courant direct de retour ($I_d$), de la sortie de retour de courant ($I_{dq}$) et d'une fréquence électrique calculée ($\hat{\omega}_{elec}$),

- calcul de flux statorique quadratique adaptatif ($\lambda_{qv}$), à partir de la consigne de tension ($V^{\#}_{dq}$), du courant quadratique de retour ($I_q$), du courant direct de retour ($I_d$), et de la vitesse électrique calculée estimée ($\hat{\omega}_{elec}$),

- calcul d'une vitesse électrique ($\omega_{elec}$) du rotor à partir d'une comparaison du flux statorique quadratique adaptatif ($\lambda_q$) et du flux statorique quadratique de référence ($\lambda_q$),

- calcul la valeur de position angulaire estimée du rotor ($\hat{\theta}$*elec)* en fonction de la vitesse électrique estimée ($\hat{\omega}_{elec}$) calculée.


## Patentansprüche

1. Steuervorrichtung (2) für einen Wechselrichter (C) zum Starten eines mehrphasigen Synchronmotors (1) bis zu einer vorgegebenen Schwellendrehzahl einer elektrischen Maschine (M), wobei die Steuervorrichtung umfasst:

   - einen Regelkreis (R), der umfasst:

      o einen Stromregler (4) zum Ausgeben eines Spannungs-Sollwerts ($V^{\#}_{dq}$) mit einer quadratischen und direkten Spannung mit einem Winkel (a) ausgehend von einem Strom-Sollwert für die Regelung ($I^{\#}_{dq'}$),
      o eine Recheneinheit (5) zum Berechnen einer direkten und indirekten Park-Transformation, wobei die Recheneinheit (5) einen Stromrückkopplungsausgang ($I_{dq}$) in einem Park-Koordinatensystem umfasst, aus Messwerten der empfangenen Phasenströme (Iu, Iv, Iw), die in einem Park-Koordinatensystem in einen quadratischen Rückstrom ($I_q$) und einen direkten Rückstrom ($I_d$) umgewandelt werden, wobei ein empfangener geschätzter Winkelpositionswert des Rotors ($\hat{\theta}$*elec)* berücksichtigt wird, **dadurch gekennzeichnet, dass** die Steuervorrichtung außerdem umfasst:

         - einen adaptiven Winkelschätzer (6) in einem geschlossenen Regelkreis, um den geschätzten Winkelpositionswert des Rotors ($\hat{\theta}$ *elec)* zu schätzen, basierend auf einer Differenz zwischen mindestens einem Wert eines Referenz-Statorflussvektors ($\lambda_q$), der in Abhängigkeit von den Rückströmen (Iq) berechnet wird, und einem Wert des adaptiven Statorflussvektors ($\lambda_{qv}$), berechnet aus dem Spannungs-Sollwert ($V^{\#}_{dq}$), den Rückströmen (Iq, $I_d$ ) und einer geschätzten elektrischen Drehzahl ($\hat{\omega}_{elec}$ ), die in Abhängigkeit von dieser Differenz berechnet wird,
         - einen Sollstrommodifikator (7), in dem, wenn ein Absolutwert der vom adaptiven Winkelschätzer (6) empfangenen geschätzten elektrischen Drehzahl ($\hat{\omega}_{elec}$ ) kleiner als die vorbestimmte Schwellendrehzahl ist, der Modifikator *(7)* einen direkten Sollstrom für den Regler ($I^{\#}_{d'}$) mit einem Wert ungleich Null berechnet und dadurch einen direkten Sollstrom ($I^{\#}_d$) eines empfangenen Strom-Sollwerts ($I^{\#}_{dq}$) modifiziert.

2. Steuervorrichtung (2) für einen Wechselrichter (C) zum Starten eines Elektromotors (1) gemäß dem vorherigen Anspruch, in der der adaptive Winkelschätzer (6) umfasst:

   ◦ einen ersten Statorflussrechner (61) mit:

      1. einem ersten Rechenblock (611) für den quadratischen Referenz-Statorfluss ($\lambda_q$),
      2. einem zweiten Rechenblock (612) für den adaptiven quadratischen Statorfluss ($\lambda_{qv}$),

   o einen zweiten Rechner (62) für eine geschätzte elektrische Drehzahl ($\hat{\omega}_{elec}$) in Abhängigkeit von einem Vergleich des adaptiven quadratischen Statorflusses ($\lambda_{qv}$) und des quadratischen Referenz-Statorflusses ($\lambda_q$),
   o einen dritten Rechner (63) zur Schätzung eines geschätzten Winkelpositionswerts des Rotors ($\hat{\theta}$*elec)* in Abhängigkeit von der berechneten geschätzten elektrischen Drehzahl ($\hat{\omega}_{elec}$).

3. Steuervorrichtung (2) für einen Wechselrichter (C) zum Starten eines Elektromotors (1) gemäß dem vorherigen Anspruch, in der der erste Rechenblock (611) den quadratischen Referenzfluss ($\lambda_q$) gemäß der folgenden Formel berechnet: $L_q I_q$, wobei $L_q$ die Statorinduktivität auf der q-Achse ist.

4. Steuervorrichtung (2) eines Wechselrichters (C) zum Starten eines Elektromotors (1) gemäß Anspruch 2 oder 3, in der der zweite Rechenblock (612) den adaptiven quadratischen Statorfluss ($\lambda_{qv}$) gemäß dem Integral der folgenden Formel berechnet: $\vartheta_q - R_s I_q - \hat{\omega}_{elec}\hat{\lambda}_{d_v} + k\tilde{\iota}_q$, wobei $R_S$ der Statorwiderstand ist, $\hat{\lambda}_{d_v}$ der adaptive Stator-Direktfluss ist, der dem Integral der folgenden Formel entspricht: $\vartheta_d - R_S I_d + \hat{\omega}_{elec}\hat{\lambda}_{qv} + k\tilde{\iota}_d$, und K eine positive Verstärkungsmatrix ist, $\tilde{\iota}_d$ und $\tilde{\iota}_q$ die Direkt- und Quadratkomponenten des Stromfehlers sind, wobei:

o

$$\tilde{\iota}_d = i_d - \hat{\iota}_d$$

$$\tilde{\iota}_q = i_q - \hat{\iota}_q$$

o und wobei der geschätzte Direktstrom $\hat{\iota}_d$ und der geschätzte quadratische Strom $\hat{\iota}_q$ in folgender Abhängigkeit berechnet werden:

$$\hat{\iota}_d = \frac{\hat{\lambda}_{d_v} - \varphi_{PM}}{L_d}$$

$$\hat{\iota}_q = \frac{\hat{\lambda}_{q_v}}{L_q}$$

5. Steuervorrichtung (2) eines Wechselrichters (C) zum Starten eines Elektromotors (1) gemäß einem der vorstehenden Ansprüche 1 bis 4, in der der Modifikator (7) des direkten Sollstroms ($I^\#_d$) einen direkten Sollstrom für den Regler ($I^\#_{d'}$) berechnet, der gleich der Quadratwurzel aus der Summe eines Wertes des maximalen quadratischen Stroms zum Quadrat mit dem Wert des quadratischen Sollstromes ($I^\#_q$) ist, der im Sollstrom ($I^\#_{dq}$) empfangen wird: $I^\#_{d'} = \sqrt{Iqmax^2 - I^\# q^2}$ .

6. Steuervorrichtung (2) eines Wechselrichters (C) zum Starten eines Elektromotors (1) gemäß dem vorhergehenden Anspruch, in der die Berechnung des modifizierten direkten Sollstroms ($I^\#_{d'}$) mit dem gleichen Vorzeichen wie die empfangene geschätzte elektrische Drehzahl ($\hat{\omega}_{elec}$) vorgegeben wird.

7. Steuervorrichtung (2) eines Wechselrichters (C) zum Starten eines Elektromotors (1) gemäß einem der vorstehenden Ansprüche 1 bis 6, in der der Modifikator (7) des direkten Sollstroms ($I^\#_d$) einen Komparator zum Vergleichen des Absolutwerts der geschätzten elektrischen Drehzahl ($\hat{\omega}_{elec}$) mit der vorgegebenen Schwellendrehzahl umfasst.

8. Steuervorrichtung (2) für einen Wechselrichter (C) zum Starten eines Elektromotors (1) gemäß einem der vorstehenden Ansprüche 1 bis 7, bei der die Steuervorrichtung in der Lage ist, den Wechselrichter für eine Drehzahl über der vorgegebenen Schwellendrehzahl zu steuern, wobei, wenn der Absolutwert der geschätzten elektrischen Drehzahl ($\hat{\omega}_{elec}$) größer als die vorgegebene Schwellendrehzahl ist, der Modifikator des direkten Sollstroms den Regel-Sollstrom ($I^\#_{dq'}$) nur entsprechend dem Sollstrom ($I^\#_{dq}$) überträgt.

9. Steuervorrichtung (2) nach dem vorhergehenden Anspruch, in der, wenn der Absolutwert der geschätzten elektrischen Drehzahl ($\hat{\omega}_{elec}$) größer als die vorgegebene Schwellendrehzahl ist, der Modifikator (7) des direkten Sollstroms ($I^\#_d$) den Sollstrom ($I^\#_{dq}$) mit einem direkten Sollstrom ($I^\#_d$) von Null überträgt, es sei denn, es wird eine Feldschwächungsvorgabe gesendet.

10. Steuervorrichtung (2) nach Anspruch 8 oder 9, in der, wenn der Absolutwert der geschätzten elektrischen Drehzahl ($\hat{\omega}_{elec}$) größer als die vorgegebene Schwellendrehzahl ist, der Winkelpositionsschätzer die Position und die Winkelgeschwindigkeit aus einer gemessenen elektromotorischen Kraft Fem schätzt.

11. Elektrische Synchronmaschine, umfassend:

- einen Elektromotor mit einem Rotor und einem Stator,
- einen Strommesssensor,
- einen Wechselrichter mit Leistungsschaltern und
- die Steuervorrichtung gemäß einem der vorstehenden Ansprüche, in der die Recheneinheit einen Befehl an den Wechselrichter aus dem Spannungssollwert ($V^{\#}_{dq}$) übermittelt, um die elektronischen Leistungsschalter mit einer bestimmten Schaltfrequenz anzusteuern und so die Grundschwingung der am Eingang der elektrischen Maschine anliegenden Statorspannung zur Ansteuerung des Elektromotors (1) zu steuern.

12. Verfahren zur Steuerung in einem geschlossenen Regelkreis ohne Positionssensor einer Synchronmaschine vom Starten bis zur maximalen Drehzahl, mit den folgenden Schritten:

- Ändern eines empfangenen Stromsollwerts (I#dq) durch Auferlegen einer geänderten direkten Soll-Stromkomponente (I#d'), die ungleich Null ist, solange eine geschätzte Drehzahl ($\hat{\omega}_{elec}$) unter einem vorgegebenen Schwellenwert liegt,

  o Berechnung eines Spannungs-Sollwerts ($V^{\#}_{dq}$), eine quadratische und eine direkte Spannungskomponente mit einem Winkel umfassend, aus einem Strom-Sollwert für die Regelung ($I^{\#}_{dq'}$) mit einer geänderten direkten Soll-Stromkomponente ($I^{\#}_{d'}$),

- Berechnung eines Befehls (PWM) zur Ansteuerung der elektronischen Leistungsschalter des Wechselrichters (C) mit einer bestimmten Schaltfrequenz und damit zur Ansteuerung der Grundschwingung der am Eingang der elektrischen Maschine anliegenden Statorspannung durch eine inverse Park-Transformation des Spannungs-Sollwerts ($V^{\#}_{dq}$) und eines geschätzten Winkelpositionswerts des Rotors ($\hat{\theta}$ elec),
- Messung der Phasenströme (Iu, Iv, Iw) und deren Umwandlung in einem Park-Koordinatensystem in einen quadratischen Rückstrom ($I_q$) und einen direkten Rückstrom ($I_d$) unter Berücksichtigung des geschätzten Winkelpositionswerts des Rotors ($\hat{\theta}elec$),
- Berechnung eines quadratischen Referenz-Statorflusses ($\lambda_q$) in Abhängigkeit vom quadratischen Rückstrom ($I_q$), vom direkten Rückstrom ($I_d$), vom Stromrückkopplungsausgang ($I_{dq}$) und einer berechneten elektrischen Frequenz ($\hat{\omega}elec$),
- Berechnung eines adaptiven quadratischen Statorflusses ($\lambda_{qv}$) anhand des Spannungs-Sollwerts ($V^{\#}_{dq}$), des quadratischen Rückstroms ($I_q$), des direkten Rückstroms ($I_d$) und der geschätzten berechneten elektrischen Drehzahl ($\hat{\omega}_{elec}$),
- Berechnung einer elektrischen Drehzahl ($\omega_{elec}$) des Rotors anhand eines Vergleichs des adaptiven quadrati-schen Statorflusses ($\lambda_q$) und des quadratischen Referenz-Statorflusses ($\lambda_q$),
- Berechnung des geschätzten Winkelpositionswerts des Rotors ($\hat{\theta}elec$) in Abhängigkeit von der berechneten geschätzten elektrischen Drehzahl ($\hat{\omega}_{elec}$).

**Claims**

1. A device (2) for controlling an inverter converter (C) for starting a multiphase synchronous electric motor (1) of an electric machine (M) up to a predetermined threshold speed, the control device comprising:

   - a regulation loop (R), comprising:

     o a current regulator (4) for delivering a voltage setpoint ($V^{\#}_{dq}$) comprising a quadratic and direct voltage with an angle (a), from a regulation current setpoint ($I^{\#}_{dq'}$),
     o a calculation unit (5) for calculating a direct and indirect Park transformation, the calculation unit (5) comprising a current return output ($I_{dq}$) in a Park reference frame, from measurement values of the phase currents (Iu, Iv, 1w) received, transformed in a Park reference frame, into a return quadratic current ($I_q$) and into a return direct current ($I_d$), taking account of a value of estimated rotor angular position ($\hat{\theta}_{elec}$) received, **characterised in that** the control device further includes:

     - a closed loop adaptive angle estimator (6), for estimating the value of the estimated rotor angular position ($\hat{\theta}_{elec}$), based on a difference between at least one piece of data of a reference stator flux vector ($\lambda$q) calculated as a function of the return currents (Iq), and a piece of data of the adaptive stator flux

vector ($\lambda_{qv}$), calculated from the voltage setpoint ($V^{\#}_{dq}$), the return currents ($I_q$, $I_d$), and an estimated electrical speed ($\hat{\omega}_{elec}$) calculated as a function of this difference,

- a modifier (7) of the setpoint current, wherein, when an absolute value of the estimated electrical speed ($\hat{\omega}_{elec}$) received by the adaptive angle estimator (6) is less than the predetermined threshold speed, the modifier (7) calculates a regulator setpoint direct current ($I^{\#}_{d'}$) having a non- zero value, thus modifying a setpoint direct current ($I^{\#}_d$) of a setpoint current ($I^{\#}_{dq}$) received.

2. The device (2) for controlling an inverter converter (C) for starting an electric motor (1) according to the preceding claim, wherein the adaptive angle estimator (6) comprises:

o a first stator flux calculator (61) comprising:

1. a first block (611) for calculating the reference stator quadratic flux ($\lambda_q$),
2. a second block (612) for calculating the adaptive quadratic stator flux ($\lambda_{qv}$),

o a second calculator (62) for an estimated electrical speed ($\hat{\omega}_{elec}$) as a function of a comparison between the adaptive quadratic stator flux ($\lambda_{qv}$) and the reference quadratic stator flux ($\lambda_q$),
o a third calculator (63) for estimating a value for the estimated rotor angular position ($\hat{\theta}_{elec}$) as a function of the estimated electrical speed ($\hat{\omega}_{elec}$) calculated.

3. The device (2) for controlling an inverter converter (C) for starting an electric motor (1) according to the preceding claim, the first calculation block (611) calculates the reference quadratic flux ($\lambda q$) according to the formula: $L_q I_q$ wherein $L_q$ is the stator inductance on the axis q.

4. The device (2) for controlling an inverter converter (C) for starting an electric motor (1) according to claim 2 or 3, wherein the second calculation block (612) calculates the adaptive quadratic stator flux ($\lambda_{qv}$) according to the integral of the following formula: $v_q - R_s i_q - \omega_{elec}\hat{\lambda}_{dv} + k\tilde{\imath}_q$ wherein $R_s$ is the stator resistance, $\lambda_{dv}$ is the adaptive direct stator flux equal to the integral of the following formula: $v_d - R_s i_d + \omega_{elec}\hat{\lambda}_{qv} + k\tilde{\imath}_d$ and K is a positive gain matrix, $\tilde{\imath}_d$ and $\tilde{\imath}_q$ are the direct and quadratic components of the error in currents with:

o

$$\tilde{\imath}_d = i_d - \hat{\imath}_d$$

o

$$\tilde{\imath}_q = i_q - \hat{\imath}_q$$

o and wherein the estimated direct current $\tilde{\imath}_d$ and the estimated quadratic current $\tilde{\imath}_q$ are calculated as a function of:

o

$$\hat{\imath}_d = \frac{\hat{\lambda}_{d_v} - \varphi_{PM}}{L_d}$$

$$\hat{\imath}_q = \frac{\hat{\lambda}_{q_v}}{L_q}$$

5. The device (2) for controlling an inverter converter (C) for starting an electric motor (1) according to one of the preceding claims 1 to 4, wherein the modifier (7) of the setpoint direct current ($I^{\#}_d$) calculates a regulator setpoint direct current ($I^{\#}_{d'}$) equal to the square root of the sum of a value of the squared maximum quadratic current with the value of the setpoint quadratic current ($I^{\#}_q$), received in the setpoint current ($I^{\#}_{dq}$):

$$I^{\#}_{d'} = \sqrt{Iqmax^2 - I^{\#}_q{}^2}.$$

6. The device (2) for controlling an inverter converter (C) for starting an electric motor (1) according to the preceding claim, wherein calculating the modified setpoint direct current ($I^\#_{d'}$) is imposed with the same sign as the estimated electrical speed ($\hat{\omega}_{elec}$) received.

7. The device (2) for controlling an inverter converter (C) for starting an electric motor (1) according to one of the preceding claims 1 to 6, wherein the modifier (7) of the setpoint direct current ($I^\#_d$) comprises a comparator for comparing the absolute value of the estimated electrical speed ($\hat{\omega}_{elec}$) with the predetermined threshold speed.

8. The device (2) for controlling an inverter converter (C) for starting an electric motor (1) according to one of the preceding claims 1 to 7, wherein the control device is able to control the converter for a rotation speed beyond the predetermined threshold speed, wherein if the absolute value of the estimated electrical speed ($\hat{\omega}_{elec}$) is greater than the predetermined threshold speed, the setpoint direct current modifier transmits the regulation setpoint current ($I^\#_{dq'}$) according to only the setpoint current ($I^\#_{dq}$).

9. The device (2) according to the preceding claim, wherein when the absolute value of the estimated electrical speed ($\hat{\omega}_{elec}$) is greater than the predetermined threshold speed, the modifier (7) of the setpoint direct current ($I^\#_d$) transmits the setpoint current ($I^\#_{dq}$) with a setpoint direct current ($I^\#_d$) equal to zero, unless a defluxing setpoint is sent.

10. The device (2) according to claim 8 or 9, wherein, if the absolute value of the estimated electrical speed ($\hat{\omega}_{elec}$) is greater than the predetermined threshold speed, the angular position estimator estimates the position and angular speed from an electromotive force EMF measured.

11. A synchronous electric machine comprising:

- an electric motor comprising a rotor and a stator,
- a current measurement sensor,
- an inverter converter comprising power switches and
- the control device according to one of the preceding claims,

wherein the calculation unit transmits a command to the converter from the voltage setpoint ($V^\#_{dq}$) to drive the electronic power switches to a specific chopping frequency and thus drive the fundamental frequency of the stator voltage input to the electric machine for driving the electric motor (1).

12. A method for driving a synchronous machine in a closed loop without a position sensor, from start-up to maximum rotation speed, comprising the steps of:

- modifying a received current setpoint ($I\#dq$) by imposing a non-zero modified setpoint direct current ($I\#d'$) as long as an estimated speed ($\hat{\omega}_{elec}$) is less than a predetermined threshold speed value,
- calculating a voltage setpoint ($V^\#_{dq}$) comprising a quadratic and direct voltage with an angle, from a regulation current setpoint ($I^\#_{dq'}$) comprising a modified setpoint direct current ($I^\#_{d'}$),
- calculating a command (PWM) for driving the electronic power switches of the inverter converter (C) at a specific chopping frequency and thus driving the fundamental frequency of the stator voltage input to the electric machine, by an inverse Park transformation of the voltage setpoint ($V^\#_{dq}$) and of a rotor estimated angular position ($\hat{\theta}_{elec}$),
- measuring the phase currents (Iu, Iv, Iw) and transforming them in a Park reference frame, into a return quadratic current ($I_q$) and a return direct current ($I_d$), taking account of the estimated rotor angular position ($\hat{\theta}_{elec}$),
- calculating a reference stator quadratic flux ($\lambda_q$) as a function of the return quadratic current ($I_q$), the return direct current ($I_d$), the current return output ($I_{dq}$) and a calculated electrical frequency ($\hat{\omega}_{elec}$),
- calculating adaptive quadratic stator flux ($\lambda_{qv}$), from the voltage setpoint ($V^\#_{dq}$), the return quadratic current ($I_q$), the return direct current ($I_d$), and the estimated electrical speed ($\hat{\omega}_{elec}$) calculated,
- calculating an electrical speed ($\omega_{elec}$) of the rotor from a comparison of the adaptive quadratic stator flux ($\lambda_{qv}$) with the reference quadratic stator flux ($\lambda_q$),
- calculating the value of the estimated rotor angular position ($\hat{\theta}_{elec}$) as a function of the estimated electrical speed ($\hat{\omega}_{elec}$) calculated.

[Fig. 1]

[Fig. 2]

EP 4 466 785 B1

[Fig. 3]

[Fig. 4a]

[Fig. 4b]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 110429886 B